# EUROPEAN PATENT APPLICATION

(11) **EP 1 840 915 A1**
(43) Date of publication of application: **03.10.2007**
(21) Application number: 06006866.5
(22) Date of filing: 31.03.2006
(51) Int. Cl.: H01G 9/025

(54) **Capacitor element and method for manufacturing the capacitor element**

(71) Applicant: Kemet Electronics Corporation, Simpsonville, South Carolina 29681 (US)
(72) Inventor: Mendes, Luis, 7000-969 Evora (PT); Oliveira, Dulce, 7000-736 Evora (PT); Monteiro, Rui, 7005-296 Evora (PT); Dias, Decio, 2600-076 Vila Franca de Xira (PT)
(74) Representative: Epping - Hermann - Fischer

(57) **Abstract**

A method for manufacturing a capacitor element is proposed, whereby the capacitor element comprising an anode body (1) with a dielectric surface (2) is dipped into a bath such that the moisture storage capacity of the capacitor element is reduced. Further, the bath is a metal bath and it does not adhere to the capacitor.

## Description

A method for manufacturing a capacitor element, in particular a solid-electrolyte capacitor element, is described. An SMD-capacitor comprising said capacitor element is also described.

A capacitor comprising a humidity protective layer is known from DE 198 46 936 C1.

One objective to be achieved lies in providing a method for manufacturing a capacitor element with a stable ESR (Equivalent Series Resistance) characteristic.

A method for manufacturing a capacitor element is proposed, whereby an anode body with a dielectric surface is dipped into a bath such that the water storage capacity of the capacitor element is minimised.

The minimisation of the water storage capacity of the capacitor element may be achieved by a material change in the capacitor element. The material change is preferably a structural change. The material change, according to one realisation of the method, may take place at a material interface between two different materials contained in the capacitor element.

According to one realisation of the method, the capacitor element comprises a cathode layer able to absorb water before it is dipped into the bath. The cathode layer may be a solid electrolytic layer. The cathode layer may at least partially surround the dielectric surface of the anode body.

Trace amounts of moisture, in particular water, may be located in the capacitor element, for example in the cathode layer, as it is dipped into the bath. The moisture may also be located at other material interfaces of the capacitor element such as at contact layer interfaces.

The material of the bath is preferably one that does not react with or adhere to the capacitor element, advantageously leaving the electrical and/or structural characteristics of the capacitor element unchanged.

The bath may contain a material that bonds with water, such as a hydrophilic material, such that the water can be washed out of the capacitor element by chemical or physical bonding. The bath may contain a material heated to a temperature sufficient for expelling the water by means of a thermal treatment, whereby the material does not chemically react with the capacitor element.

According to one preferred realisation of the method, the bath is a metal bath at a temperature sufficient to minimise the water storage capacity of the capacitor element. The temperature may also be sufficiently high to expel the water out of the capacitor element by thermal evaporation.

The treatment of the capacitor element through its direct contact with the metal bath advantageously minimises the moisture storage capacity and expels any trace amounts of moisture in a very short amount of time, that is, in the range of 1 to 10 minutes. Thus, the manufacture of the capacitor element and/or a capacitor comprising the capacitor element is greatly accelerated, thereby saving manufacturing time and cost. Furthermore, the temperature of the metal bath is such that the electrical characteristics of the capacitor element are not or at least only minimally influenced by the treatment. Adverse mechanical effects, such as cracking of a part of the capacitor element, can also be avoided due to the relatively low temperature of the metal bath.

It is preferred that the bath, in particular the metal bath, has a temperature in the range of 180°C to 400°C, in particular 270°C to 330°C.

It is preferred that the anode body contains a valve metal such as tantalum, niobium, niobium oxide or aluminium. It can be formed as a porous sintered body. When Aluminium is used, the anode body may be formed as a composite layered anode with laminated aluminium foils.

The valve metals have the advantage that they can form a dielectric outer surface when subjected to an electrical field in an anodisation process, thus saving an additional manufacturing process whereby a dielectric layer is deposited on an anode body. When pulverised and pressed together to form a sinterable mould, a valve metal yields high capacitance properties through a large internal surface area whilst nevertheless contributing to a body of relatively small size.

According to another realisation of the method, the metal bath contains tin or a tin alloy. Tin has the advantage that it is a relatively inexpensive metal and is also a liquid in the preferred temperature range. However, other metals which are a liquid in the said range can also be used, provided they do not react with the capacitor element such that its electrical properties change.

The cathode layer may contain manganese dioxide (MnO₂). A cathode layer containing manganese dioxide is preferably formed by impregnation of the anode with a manganese salt solution especially a manganese nitrate solution and subsequent thermal decomposition, ideally between 250°C and 300°C.

An electrical anode lead preferably extends from the interior of the anode body to the exterior. At the interior of the capacitor element, the lead may contain the same or different material than the anode body, preferably a valve metal.

An electrical cathode lead preferably is connected electrically to a cathode layer of the capacitor element, whereby it may be connected mechanically to the cathode layer itself and or to one or more of the following: a graphite layer electrically in contact with the cathode layer, a contact layer electrically in contact with the cathode layer or to an adhesive layer electrically in contact with the cathode layer.

At the exterior of the capacitor element, the electrical anode and cathode leads may contain tin or gold and/or be plated with these materials. The materials have the advantage that they have relatively low melting points and can thus be easily soldered onto a circuit board.

The electrical anode lead in the interior of the capacitor element preferably comprises a wire of the same material as the anode body. Attached to the wire at the exterior of the capacitor element is a terminal, for example also taking the form of a wire with a surface of another metallic material, such as tin or gold.
The described method is advantageously applicable to any capacitor element that can initially absorb, store or contain trace amounts of moisture or water. Thus, a capacitor element comprising an anode body surrounded by a cathode layer upon which a layer chemically non-reactive with an outer contact layer is arranged, can also be dipped into a metal bath held at a temperature in the preferred range. The layer chemically non-reactive with an outer contact layer may for example be a graphite layer. As this layer need not completely cover the cathode layer, it does not prevent the trace amounts of water contained in the layers below to be removed. The graphite layer is preferably formed by dipping the capacitor element into a suspension of ideally highly graphitised carbon particles, such as a graphite paint.

The method for manufacturing the capacitor element preferably comprises a series of steps during the manufacture of a capacitor, in particular an SMD-capacitor, comprising said capacitor element. After the capacitor element has been dipped into the graphite containing liquid in the described manner, a contact layer may be deposited on the surface of the capacitor element. The contact layer may for example comprise an organic solution containing silver, such as a silver paint. Additionally, an electrically conductive adhesive layer may be brought onto the contact layer. The adhesive of the adhesive layer may comprise silver and an organic adhesive material.

It is preferred that an electrical cathode lead is attached to the electrically conductive adhesive layer and extends to the exterior of the capacitor element. The thus obtained capacitor element may then be encapsulated in an insulating housing, containing, for example, a polymer. Alternatively, the housing may contain an encapsulation material such as resin and be formed as an epoxy resin moulding.

The electrical lead extending from the electrically conductive adhesive layer may run along the exterior of the insulating housing and form a terminal. It preferably contains tin or gold. In particular, it can be plated with tin or gold.

At the exterior of the capacitor element, both the electrical lead extending from the anode body and the one extending from the adhesive layer may be attached to the outer surface of the insulating housing. They may form contact pads for example on the outer base surface of the capacitor element. In this manner, a convenient SMD-capacitor chip can be provided.

According to one preferred realisation of the method of manufacturing the capacitor element, a bias voltage is applied to the capacitor element during the time it is dipped into the metal bath. This has the advantageous effect of stabilising the dielectric surface of the anode body that was created during the anodisation of the sintered body. The bias application preferably takes place before the deposition of a contact layer on the capacitor element.

When applying the bias voltage, the anode and the bath in contact with the cathode lead of the capacitor element are electrically connected to electric potentials.

A capacitor element is proposed, comprising an anode body, preferably with a dielectric surface, wherein the capacitor element has a minimal moisture storage capacity such that its electrical characteristics are unaffected when exposed to moisture.

The anode body preferably contains a valve metal and may be porously sintered or comprise laminated layers of the valve metal.

In particular, the capacitor element comprises a cathode layer which has the minimal moisture storage capacity. According to another embodiment, the capacitor element comprises a plurality of layers, such as a solid electrolytic layer, a graphite layer, a contact layer, an electrically and/or thermally insulating layer and/or an adhesive layer, wherein the minimal moisture storage capacity lies at a material interface between two of said plurality of layers. The minimal moisture storage capacity may however also be a characteristic of one of the said layers itself.

The described methods and embodiments are further elaborated upon by means of the following drawings and examples, whereby:
- Drawing 1: shows a tantalum capacitor,
- Drawing 2: shows a graph depicting the improvement of ESR characteristics of bath-treated tantalum capacitors compared to reference tantalum capacitors,
- Drawing 3: shows a graph according to drawing 2 but with a larger number of capacitors,
- Drawing 4: shows a graph according to drawing 2 but with an even larger number of capacitors that have undergone tests for a longer period of time.

It has been found that when a capacitor element comprising a cathode layer is tested in an atmosphere containing an amount of water vapour (humid environment) for the purpose of evaluating the stability of the electrical properties of the capacitor element, the cathode layer draws in or bonds with some of the water contained in the atmosphere. This behaviour is considered dependent on the moisture storage locations of the capacitor element. Thereafter, the moisture trapped or physically bonded with a part of the capacitor element, such as in or at the cathode or contact layers, contributed to an ESR increase over time.

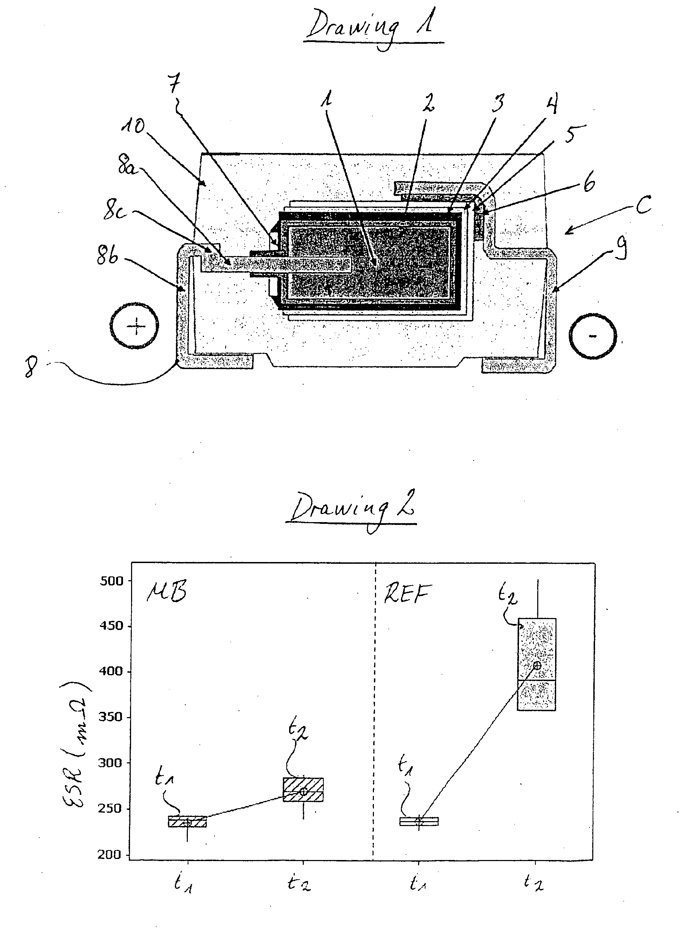

Drawing 1 shows a tantalum capacitor C with a porous, sintered anode pellet 1 made of a compressed mould of a valve metal, such as tantalum powder, that has first been debindered and then sintered, whereby the central pellet 1 has been anodised to form a dielectric tantalum pentoxide (Ta₂O₅) outer surface 2.

Preferably, an electrical lead 8 in the form of a wire is inserted into the pellet 1 prior to the anodisation of the pellet. When the part 8a of the electrical lead inside the capacitor element also contains a valve metal, such as tantalum, the ensuing anodisation process also provides it with a dielectric outer surface at the same time, thus avoiding insulating the wire in a separate manufacturing step. As the internal part 8a of the wire 8 will become covered by other layers of the capacitor element in the subsequent manufacturing process, including cathode layers, the dielectric surface of the wire enables it to be electrically insulated from these layers. An electrical interaction, possibly a short circuit, can thus be prevented between the anode wire 8 and cathode layers of opposite electrical charge. Furthermore, the anode lead 8 extending from the anode body can be used as a holding means by a dipping mechanism, comprising, for example, a clamping means, for dipping capacitor elements into a bath.

At least partially covering the dielectric outer surface 2 of the pellet 1 is a manganese dioxide (Mn0₂) cathode layer 3 created by dipping the pellet 1 with its anodised surface 2 into a manganese nitrate solution and thermally decomposing it between 250°C and 300°C. A PTFE washer or primer 7 may also be deposited onto the surface of tantalum pentoxide layer 2. This can be done to avoid the presence of manganese dioxide on a lead wire containing a valve metal, thereby further avoiding short circuits, for example.

Covering the cathode layer 3 is a graphite layer 4 that has been created by dipping the capacitor element comprising the cathode layer into a suspension of highly graphitised carbon particles.

Once the capacitor element has been given a graphite layer 4, it is dipped into a bath of tin or tin alloy at a temperature between 180°C and 400°C for up to 10 minutes, preferably not less than one minute, however. The tin alloy may be an alloy of tin and lead. The tin bath has the effect of reducing the moisture storage capacity of the manganese dioxide layer 3 and may also expel any trace amounts of water or moisture that may be left in the manganese dioxide layer 3 from exposure to a humid environment. The reduction of the moisture storage capacity is achieved through the tin bath by a material change in or at the cathode layer 3. The graphite layer 4 does not wholly cover the manganese dioxide layer 3, so that the moisture in the manganese layer 3 can be expelled to the outside part the graphite layer.

During the tin bath, the capacitor element may be subjected to a bias voltage until a maximum of 20% of the dielectric forming voltage. This can have the advantage of healing, i.e. stabilising the dielectric surface 2 of the anode body 1, thereby resulting in a capacitor element with an even higher ESR stability than that which is achieved merely by the temperature treatment. Furthermore, having applied a bias voltage for self-healing the dielectric surface 2, the capacitor element suffers less from leakage currents.

The tin or tin alloy of the bath does not adhere to the graphite layer, thus avoiding the need to remove the tin from the capacitor element in a further manufacturing step.

Apart from dipping the capacitor element into a metal bath, it may be dipped into an oil bath of such viscosity that the oil does not penetrate the interior of the capacitor element and does not react with it to change its electrical characteristics. A possible oil would be silicone oil with chemically inert additives to increase its viscosity to the desired extent.

At least partly covering the graphite layer is a contact layer 5 containing silver which is created by applying a silver paint to the capacitor element comprising the graphite layer after it has been treated in the tin bath. The silver paint contains silver along with an organic solution. The graphite layer 4 has the function of a layer that is chemically non-reactive with the contact layer 5 but nevertheless is electrically conductive. Thus, the manganese dioxide cathode layer 3 cannot react with the silver contact layer 5 but remains in electrical contact with it. Hence, a multi-layered composite cathode unit is created with the manganese dioxide layer 3, the graphite layer 4 and the silver contact layer 5.

Attached to the silver contact layer 5 is a silver adhesive layer 6 that adheres well to both the contact layer 5 and to an electrical lead 9 of preferably another material.

Attached to the silver adhesive layer 6 is an electrical lead 9, for example in the form of a wire, that extends from it to the exterior of the capacitor element. The lead 9 contains and is preferably plated with tin or gold.

Surrounding the so far created capacitor element is a resin moulding 10, such as an epoxy resin moulding, that electrically, chemically and to a lesser extent thermally insulates the capacitor element from the environment.

At the exterior of the capacitor element comprising the epoxy moulding 10, the external part 8b of electrical lead 8 extending from the anode part of the capacitor element may contain a material different from that of the anode, such as tin or gold. The interior part 8a of the electrical lead 8 which can comprise the same material as the anode body can be welded at a junction 8c to the external part 8b of the lead that can contain another material, whereby the welding takes place prior to the capacitor element being covered by the encapsulation material 10.

The electrical leads 8 and 9 extending from the anode and cathode parts of the capacitor element can both be partially wrapped around the outside surface of the resin moulding 10, such that they create electrical terminals. In particular, the terminals may be wrapped around the resin moulding 10 so as to form contact pads at the base of its outer surface. In this manner, an SMD-capacitor easily mountable on a circuit board can be created.

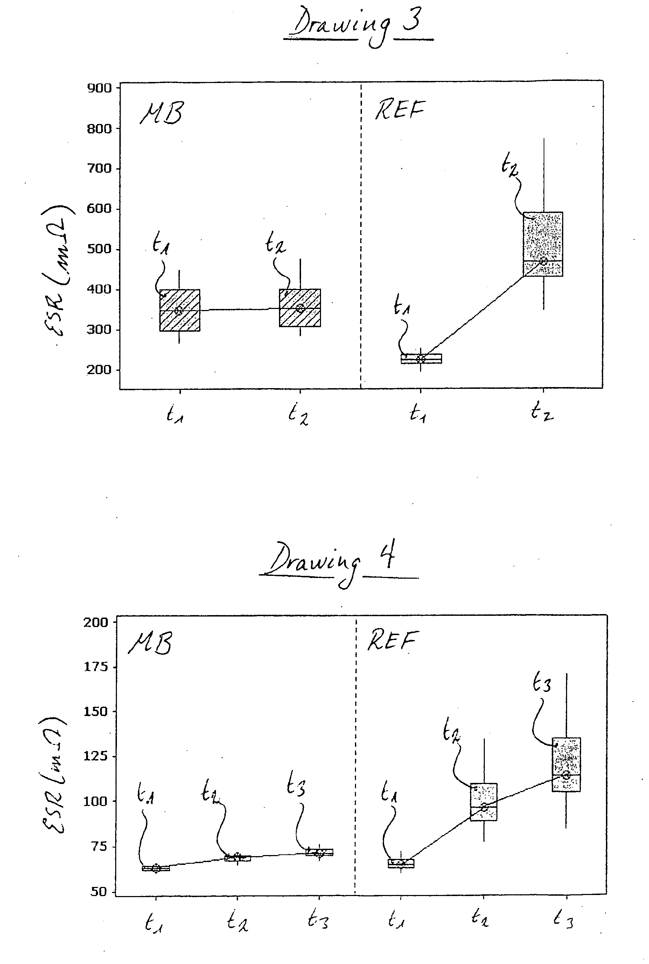

Drawing 2 shows the behaviour of 6 capacitors having undergone a thermal treatment with a tin alloy bath, shown in the left hand box marked MB, compared to the behaviour of 6 reference capacitors that have not undergone such a bath which are shown in the box marked REF. The behaviour was monitored after 1000 hours at temperatures averaging 85°C and at a humidity of 85%.

Initially, at a time t₁, the ESR of capacitors belonging to the group MB was measured to average approximately 240 to 245 mΩ (milliohms). After a period of 1000 hours, denoted with t₂, during which the 35V-capacitors were continuously used, the capacitors belonging to this group were measured to have an average ESR of approximately 260 to 265 mΩ. Thus, an increase of merely 20 mΩ was measured. On the other hand, the reference 35V-capacitors, beginning at time t₁ with an average ESR about the same as that of the MB capacitors, were measured to have an ESR average of approximately between 355 and 460 mΩ when measured 1000 hours after continuous use at time t₂. Thus an increase of ESR of 110 to 220 mΩ was measured.

Drawing 3 shows the same test as drawing 2, but with 30 35V-capacitors from a different test run involved for each group MB or REF. When tested in this manner, it was found that the capacitors belonging to the group MB had higher ESRs at time t1 compared to the 30 reference 35V-capacitors, but a lower ESR at time t2. The difference in ESR between times t1 and t2 for the capacitors belonging to MB group was merely between 10 to 20 mΩ, thus indicating great stability over a long period of time. The reference capacitors, on the other hand, showed a difference of more than 200 mΩ between times t₁ and t₂, indicating far poorer ESR stability. The environmental conditions for this test were the same as for those indicated with the description of drawing 2.

Drawing 4 shows the results of a test conducted under the same environmental conditions as indicated for drawings 2 and 3, with the difference that this time 60 capacitors for each group were measured 3 times, initially at time t₁, then 1000 hours afterwards at time t₂ and finally 2000 hours after time t₁ at time t₃. The capacitors used for both groups MB and REF were of a different type and each had lower voltages averaging 10V. The capacitors belonging to group MB showed a difference in ESR after a time of 2000 hours of approximately 5 mΩ. The reference capacitors, on the other hand, showed an increased ESR of approximately 45 mΩ.

### List of Abbreviations:

- C: Capacitor
- 1: anode body
- 2: dielectric surface of anode body
- 3: manganese dioxide layer
- 4: graphite layer
- 5: silver contact layer
- 6: silver adhesive layer
- 7: PTFE washer or primer
- 8: electrical anode lead
- 8a: internal part of electrical anode lead
- 8b: external part of electrical anode lead
- 8c: welded portion of electrical anode lead
- 9: electrical cathode lead
- 10: resin mould

- t₁: time t₁
- t₂: time t₁ + 1000 hours
- t₃: time t₁ + 2000 hours
- MB: group of capacitors having undergone bath treatment
- REF: reference capacitors

## Claims

1. Method for manufacturing a capacitor element, whereby the capacitor element comprising an anode body (1) with a dielectric surface (2) is dipped into a bath such that the moisture storage capacity of the capacitor element is reduced.

2. Method according to claim 1, whereby the reduction of the moisture storage capacity is achieved by material change in the capacitor element.

3. Method according to claim 2, whereby the material change takes place at an interface of two different materials of the capacitor.

4. Method according to one of the preceding claims, whereby the material of the bath does not adhere to the capacitor element.

5. Method according to one of the preceding claims, whereby the bath is a metal bath.

6. Method according to one of the preceding claims, whereby the bath has a temperature in the range 180°C to 400°C.

7. Method according to one of the claims 5 or 6, whereby the metal bath contains tin.

8. Method according to one of the preceding claims, whereby the capacitor element is at least partially surrounded by a cathode layer (3).

9. Method according to claim 8, whereby the moisture storage capacity of the cathode layer (3) is reduced.

10. Method according to one of the claims 8 or 9, whereby the moisture storage capacity lying at a material interface between the cathode layer (3) and another layer is reduced.

11. Method according to one of the preceding claims, whereby an electrically insulating housing (10) is made to cover the capacitor element.

12. Method according to claim 11, whereby an electrical cathode lead (7) is electrically connected to the cathode layer and is formed along the exterior surface of the insulating housing (10) so as to comprise a contact pad.

13. Method according to one of the claims 11 or 12, whereby an electrical anode lead (8) extends outwardly from the anode body (1) and is formed along the exterior surface of the insulating housing (10) so as to comprise a contact pad.

14. Method according to one of the preceding claims, whereby the anode body (1) contains a valve metal.

15. Method according to one of the preceding claims, whereby the anode body (1) is a porous sintered anode body.

16. Capacitor element, comprising an anode body (1) with a dielectric surface (2), said capacitor element having a minimal moisture storage capacity such that its electrical characteristics are unaffected when exposed to moisture.

17. Capacitor element according to claim 16, wherein the capacitor element comprises a cathode layer (3) having the minimal moisture storage capacity.

18. Capacitor element according to claims 16 or 17, comprising a plurality of layers, wherein the minimal moisture storage capacity lies at a material interface between two of the plurality of layers.
